# EUROPÄISCHE PATENTANMELDUNG

(11) **EP 3 524 361 A1**
(43) Veröffentlichungstag der Anmeldung: **14.08.2019**
(21) Anmeldenummer: 19154721.5
(22) Anmeldetag: 31.01.2019
(51) Int. Cl.: B05B 14/43, B01D 46/00

(54) **VORRICHTUNG ZUM ABSCHEIDEN VON OVERSPRAY**

(30) Priorität: 09.02.2018 DE 102018103019
(71) Anmelder: Eisenmann SE, 71032 Böblingen (DE)
(72) Erfinder: Röckle, Jürgen, 71106 Magstadt (DE)
(74) Vertreter: Ostertag & Partner Patentanwälte mbB

(57) **Zusammenfassung**

Die Erfindung betrifft eine Vorrichtung zum Abscheiden von Overspray aus mit Overspray beladener Kabinen-luft von Oberflächenbehandlungsanlagen, mit wenigstens einer Abscheideeinheit, durch welche mit Overspray beladene Kabinenluft leitbar ist und in welcher Overspray abscheidbar ist, wobei die Abscheideeinheit eine Filtervorrichtung mit mindestens einem ersten und einem zweiten Filterelement sowie einem ersten und einem zweiten flächig ausgebildeten Strukturelement aufweist, wobei die Strukturelemente Durchgangsöffnungen aufweisen, welche mit der Kabinenluft durchströmbar sind, und wobei die Durchgangsöffnungen des ersten und des zweiten Strukturelements in Strömungsrichtung so angeordnet sind, dass die Durchgangsöffnungen in Strömungsrichtung nicht vollständig miteinander fluchten.

## Beschreibung

### HINTERGRUND DER ERFINDUNG

### 1. Gebiet der Erfindung

Die Erfindung betrifft eine Vorrichtung zum Abscheiden von Overspray aus mit Overspray beladener Kabinenluft von Oberflächenbehandlungsanlagen, mit wenigstens einer Abscheideeinheit, durch welche mit Overspray beladene Kabinenluft leitbar ist und in welcher Overspray abscheidbar ist.

### 2. Beschreibung des Standes der Technik

Bei der manuellen oder automatischen Applikation von Lacken auf Gegenständen gelangt ein Teilstrom des Lackes, der im Allgemeinen sowohl Festkörper oder/und Bindemittel als auch Lösemittel enthält, nicht auf den Gegenstand. Dieser Teilstrom wird als Overspray bezeichnet. Im Folgenden werden die Begriffe Overspray oder Overspray-Partikel im Sinne eines dispersen Systems, wie einer Emulsion, Suspension oder einer Kombination daraus verstanden. Der Overspray wird von dem Luftstrom in der Lackierkabine erfasst und einer Abscheidung zugeführt, so dass die Luft gegebenenfalls nach einer geeigneten Konditionierung wieder in die Beschichtungskabine zurückgeleitet werden kann.

Bei Anlagen mit größerem Lackverbrauch, beispielsweise bei Anlagen zum Lackieren von Fahrzeugkarosserien, kommen in bekannter Weise bevorzugt Nassabscheidesysteme einerseits oder elektrostatisch arbeitende Trockenabscheider andererseits zum Einsatz. Als Alternative kommen auch Systeme mit austauschbaren Abscheideeinheiten zum Einsatz, die nach Erreichen einer Grenzbeladung mit Overspray gegen unbeladene Abscheideeinheiten ausgetauscht und entsorgt oder gegebenenfalls recycelt werden. Die Aufbereitung oder/und Entsorgung von derartigen Abscheideeinheiten kann energetisch und auch im Hinblick auf die erforderlichen Ressourcen verträglicher sein als bei entsprechenden Nass- oder Trockenabscheidern.

Solche austauschbaren Trockenabscheidesysteme können beispielsweise die partikelhaltige Kabinenabluft durch labyrinthartige Strukturen strömen lassen und anschließend durch ein Vlies leiten, das als Vorfilter für eine nachgelagerte zweite Filterstufe vorgesehen sein kann. Dabei sind die Filterwirkungen der einzelnen Stufen aufeinander abzustimmen.

Nachteilig an diesem Aufbau ist die nur schwer durchführbare Anpassbarkeit des Filtersystems an sich ändernde Oversprayzusammensetzungen. Enthält der Overspray beispielsweise einen höheren Anteil einer bestimmten abzuscheidenden Fraktion als ursprünglich geplant, kann die Gesamtfilterwirkung beeinträchtigt werden oder unerwünscht kurze Wartungsintervalle zur Folge haben.

### ZUSAMMENFASSUNG DER ERFINDUNG

Es ist eine Aufgabe der Erfindung, eine Vorrichtung zum Abscheiden von Overspray aus mit Overspray beladener Kabinenluft der eingangs genannten Art anzugeben, welche auf einfache Art und Weise an wechselnde Oversprayzusammensetzungen anpassbar ist und gleichzeitig kostengünstig herzustellen und zu warten ist.

Die Erfindung wird durch eine Vorrichtung gemäß dem unabhängigen Anspruch 1 gelöst. Weitere Ausgestaltungen der Erfindung sind in den abhängigen Ansprüchen angegeben.

Die erfindungsgemäße Vorrichtung zum Abscheiden von Overspray aus mit Overspray beladener Kabinenluft von Oberflächenbehandlungsanlagen weist wenigstens eine Abscheideeinheit auf. Es können je Vorrichtung eine oder mehrere solcher Abscheideeinheiten vorgesehen sein. Dabei ist in der Regel vorgesehen, dass die gesamte Kabinenluft auf die verschiedenen Abscheideeinheiten aufgeteilt wird, Alternativ oder zusätzlich kann vorgesehen sein, dass verschiedenen Bereichen einer Oberflächenbehandlungsanlage jeweils eine oder mehrere Abscheideeinheiten zugeordnet sind.

Durch eine solche Abscheideeinheit ist die mit Overspray beladene Kabinenluft leitbar und die Abscheideeinheit ist dazu ausgelegt, einen Teil oder den gesamten Overspray soweit aus der Kabinenluft auszufiltern, dass die abströmende Luft abgeblasen oder einer Wiederverwendung - beispielsweise nach einer Klimatisierung der Kabine -zugeführt werden kann.

Die erfindungsgemäße Abscheideeinheit weist eine Filtervorrichtung mit mindestens einem Filterelement sowie einem ersten und einem zweiten flächig ausgebildeten Strukturelement auf. Das erste und das zweite Strukturelement weisen jeweils Durchgangsöffnungen auf. Diese Durchgangsöffnungen sind in dem Strukturelement so angeordnet, dass Kabinenluft durchströmbar ist. Beispielsweise kann das Strukturelement den gesamten freien Strömungsquerschnitt der Abscheideeinheit abdecken.

Die Durchgangsöffnungen des ersten und des zweiten Strukturelements sind in Strömungsrichtung so angeordnet, dass Durchgangsöffnungen des ersten Strukturelements in Strömungsrichtung nicht vollständig mit entsprechenden Durchgangsöffnungen des zweiten Strukturelements fluchten. Dabei soll der Begriff "nicht fluchten" so verstanden werden, dass Kabinenluft, welche durch eine Durchgangsöffnung des ersten Strukturelements strömt, nicht ohne eine Ablenkung durch eine entsprechende Durchgangsöffnung des zweiten Strukturelements strömen kann. Dabei kann die Ablenkung beispielsweise durch eine reine Richtungsänderung der Strömung, aus einer Änderung der Fläche oder der Form des zu durchströmenden Querschnitts oder aus einer beliebigen Kombination erfolgen. Dies kann beispielsweise durch eine verschiedene Anordnung der gleichen Anzahl an Durchgangsöffnungen mit der gleichen Form an den verschiedenen Strukturelementen erfolgen. Alternativ oder zusätzlich kann die geometrische Form bei gleichbleibender Fläche oder/und die Querschnittsfläche der einzelnen Durchgangsöffnungen variieren. Auch kann die Anzahl der Durchgangsöffnungen von Strukturelement zu Strukturelement verändert werden.

Auf diese Weise kann einerseits ein Trägheitsfilter geschaffen werden, der durch eine Ablenkung der strömenden Kabinenluft Teile des mit der Kabinenluft transportierten Oversprays ausfiltern kann. Andererseits kann die Filterwirkung des Filterelements durch eine Veränderung des durchströmbaren Querschnitts auf einfache Weise den jeweiligen Erfordernissen angepasst werden.

Bei einer bevorzugten Ausführungsform sind die Durchgangsöffnungen des ersten und des zweiten Strukturelements zueinander so angeordnet, dass die durchströmende Kabinenluft so geleitet wird, dass eine Trägheitsfilterwirkung entsteht. Dies kann, wie eben erwähnt, beispielsweise durch eine Ablenkung der Strömung zwischen dem stromaufwärts gelegenen Strukturelement und dem stromabwärts gelegene Strukturelement erfolgen.

Bei einer vorteilhaften Weiterbildung der Erfindung kann vorgesehen sein, dass das Filterelement ein erstes Strukturelement und ein zweites Strukturelement aufweist. Es ist also auf dies Weise möglich, die Trägheitsfilterwirkung bereits innerhalb eines Filterelements hervorzurufen. Somit weist das Filterelement eine entsprechende Filterwirkung auf. Eine Kombination zweier oder mehrerer solcher Filterelemente ermöglicht eine genaue Steuerung der Einzelfilterwirkung und der Gesamtfilterwirkung auf einfache Art und Weise.

Bei einer besonders bevorzugten Weiterentwicklung der Erfindung ist vorgesehen, dass das Filterelement in Strömungsrichtung gesehen zwischen dem ersten Strukturelement und dem zweiten Strukturelement ein Tiefenfilterelement aufweist. Es kann auf diese Weise die bereits erläuterte Trägheitsfilterwirkung mit der Tiefenfilterwirkung des Tiefenfilterelements kombiniert werden. Während die durch eine Durchgangsöffnung des ersten Strukturelements strömende Kabinenluft durch die nicht fluchtende Durchgangsöffnung des zweiten in Strömungsrichtung nachgelagerten Strukturelements strömen möchte, wird die Strömung abgelenkt und bildet so den Trägheitsfiltereffekt aus. Gleichzeitig durchströmt die Kabinenluft den Tiefenfilter und wird so einem weiteren Abscheideeffekt unterzogen. Diese gleichzeitige Kombination aus Filtereffekten hat sich als besonders effektiv hinsichtlich der Filterwirkung und den Herstellungskosten für ein solches Filterelement herausgestellt.

Bei einer ebenfalls bevorzugten Weiterbildung ist in diesem Zusammenhang vorgesehen, dass das Tiefenfilterelement ein eine Partikelagglomeration unterstützendes Additiv aufweist. Ein solches Additiv verstärkt die Tiefenfilter- und Trägheitsfilterwirkung, indem es ein Anlagern der in dem Overspray befindlichen Partikel - seien es feste Teilchen oder Tröpfchen - erleichtert oder fördert. Ein solches Additiv kann beispielsweise Industrievaseline aufweisen.

Bei einer vorteilhaften Ausführungsform kann vorgesehen sein, dass Filterelement eine Rahmenstruktur aufweist, welche mit dem ersten oder/und zweiten Strukturelement verbunden ist. Die Rahmenstruktur kann dabei vorteilhafterweise so ausgebildet sein, dass das einzelne Filterelement selbsttragend ist und so eine einfache Handhabung nach der Herstellung für den Zusammenbau der Abscheideeinheit oder bei eine Auswechseln einzelner oder aller Filterelemente möglich ist. Die Rahmenstruktur kann dabei aus dem gleichen Material wie die Strukturelemente oder auch aus einem anderen Material ausgebildet sein. Beispielhafte Materialien für die Strukturelemente und den Rahmen sind Holz, Kartonage oder/und Kunststoff. Der Rahmen kann dabei massiv ausgebildet sein oder beispielsweise durch Auffaltung eines oder beider Strukturelemente.

In diesem Zusammenhang kann vorgesehen sein, dass die Rahmenstruktur integral mit dem ersten oder/und dem zweiten Strukturelement ausgebildet ist.

Bei einer besonders bevorzugten Ausführungsform kann vorgesehen sein, dass das Filterelement in Strömungsrichtung gesehen ein erstes Strukturelement, ein Tiefenfilterelement und ein zweites Strukturelement aufweist, welche miteinander sandwichartig verbunden sind. Durch die Sandwichbauweise ergibt sich einerseits eine hohe Eigenstabilität des Filterelements, die ein einfaches Handling bei Lagerung und insbesondere bei Austausch ermöglicht. Andererseits vereint diese Bauweise zwei Filterarten - Tiefenfilterung und Trägheitsfilterung - auf einfache Weise in einem Bauteil. Durch eine geeignete Staffelung der Filterwirkung mehrerer Filterelemente hintereinander kann eine Gesamtfilterwirkung erzielt werden, die beispielsweise auf eine bestimmte Zusammensetzung von Overspray angepasst ist.

Bei einer Weiterbildung der Erfindung ist vorgesehen, dass die Abscheideeinheit eine Aufnahme für ein oder mehrere Filterelemente aufweist. Dabei kann für jedes einzelne Filterelement eine separate Aufnahme vorgesehen sein. Alternativ kann eine Aufnahme für eine Mehrzahl an Filterelemente vorgesehen sein. Bei einer Aufnahme kann es sich beispielsweise um einen Einschub handeln, in der ein Filterelement von außen oder bei der Herstellung der Abscheideeinheit einschiebbar ist. Alternativ kann das Filterelement auch in die Aufnahme einlegbar oder anderweitig daran befestigbar sein.

Bei einer Ausführungsform können ein erstes und ein zweites Filterelement vorgesehen sein.

Besonders bevorzugt ist es, wenn das erste Filterelement eine andere Filtercharakteristik aufweist als das zweite Filterelement. Dies ermöglicht ein "Maßschneidern" der Gesamtfiltercharakteristik der Abscheideeinheit. Besonders vorteilhaft ist es in diesem Zusammenhang, wenn die einzelnen Filterelemente separat in die Aufnahmen einbringbar und somit einzeln austauschbar sind.

Eine vorteilhafte Ausführungsform sieht vor, dass die Abscheideeinheit zumindest drei Filterelemente mit unterschiedlicher Filtercharakteristik aufweist. Dies ermöglicht eine besonders gute Anpassbarkeit der Gesamtfiltercharakteristik an bestimmte Zusammensetzungen der zu reinigenden Kabinenabluft.

Der Erfindungsgedanke lässt sich auch mit einer Beschichtungsanlage zur Beschichtung von Fahrzeugkarosserien sowie mit einem Verfahren zur Behandlung von Overspray einer Beschichtungsanlage jeweils mit einer Vorrichtung wie vorstehend beschrieben realisieren.

Die Erfindung vereinigt zusammenfassend die Funktionen des Trägheitsabscheiders und des Tiefenabscheiders in einem Filterelement. Mit solchen Filterelementen lässt sich durch die Möglichkeit der Variation des Innenlebens ein modulares Filterkonzept aufbauen, das auf den entsprechenden Lack anpassbar ist. Gleichzeitig kann ein solches Filterelement mit einem Additiv ergänzt werden, um die Wirksamkeit der Trägheitsabscheidung an den Lack anzupassen und gleichzeitig die Standzeiten zu verbessern.

Derartige Filterelemente können mehrfach hintereinander angeordnet werden. Die Filterelemente können vorzugsweise über den gesamten Querschnitt der Abscheidevorrichtung senkrecht zur Strömungsrichtung reichen. In Strömungsrichtung der Abluft kann es beispielsweise sinnvoll sein, die Dichte der Füllung der einzelnen Filterelemente zu erhöhen, um die Filterleistung zu steigern. Bei einer Einteilung der Dichte der Filterelemente von 1 = "sehr durchlässig" bis 10 = "sehr dicht" kann bei drei hintereinander angeordneten Filterelementen beispielsweise bei einem Lack eine Staffelung von 1-3-8 sinnvoll sein, während bei einem anderen Lacksystem beispielsweise eine Staffelung von 1-1-5 bessere Filterergebnisse erzielen kann.

Bei versetzt angebrachten Lochplatten kann der Abluftstrom mehrfach umgelenkt werden. Die Lochplatten wirken dabei wie ein Trägheitsabscheider, der durch Umlenken des Abluftstroms die Partikel abfängt.

Die Füllung zwischen den Lochplatten hat die Funktion eines Tiefenabscheiders. Die Füllung wird beispielsweise entlang der Strömung des Abluftstroms innerhalb des Trockenabscheiders immer dichter, um die immer kleineren Partikel abfangen zu können. Die Abfolge der Schrittweise in der Dichtedifferenz zwischen Filterelementen ist spezifisch auf den anfallenden Overspray abstimmbar. So ist es möglich, ein modulares Filterkonzept aufzubauen, das anhand einer Matrix für verschiedene Lacke verschiedene Dichtekombinationen vorsieht. Es kann vorgesehen sein, die Füllung mit Additiven wie beispielsweise Industrievaseline zu benetzen. Das Additiv sollte bei der Anwendung der Lackierkabine nicht den Lack benetzend und damit störend wirken. Es kann vor oder nach dem Einspannen der Füllung in den Rahmen auf- oder eingebracht werden. Dabei soll es helfen, die Partikelagglomeration zu unterstützen, während der Abluftstrom durch den Trockenabscheider gelenkt wird. Das Additiv kann so gestaltet sein, dass es auf den jeweils eingesetzten Lack individuell anpassbar ist.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: in einer schematischen Querschnittsansicht eine Lackierkabine mit einer Abscheideeinheit für Overspray, bei welcher Kabinenluft über eine Luftleiteinrichtung zu einer Abscheidevorrichtung geleitet wird;
- Figur 2: in einer perspektivischen Teilaufrissansicht eine Ausführungsform eines erfindungsgemäßen Filterelements; und
- Figuren 3-5: in schematischen perspektivischen Ansichten verschiedene Ausführungsformen von Filtermodulen.

### BESCHREIBUNG BEVORZUGTER AUSFÜHRUNGSBEISPIELE

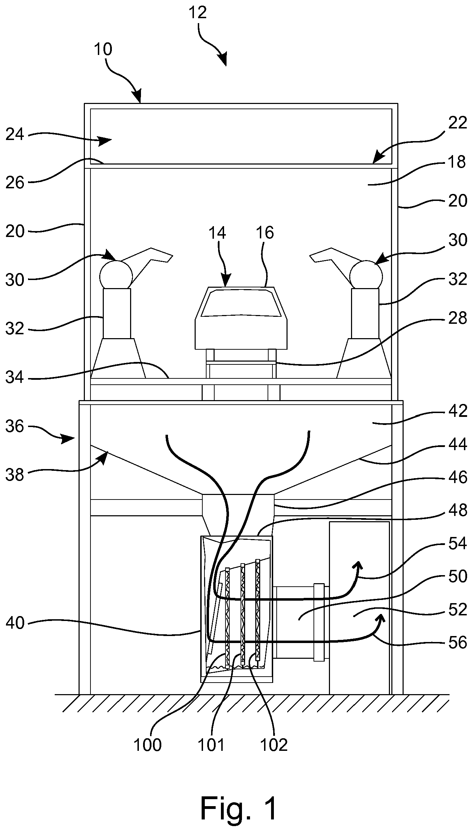

Figur 1 zeigt eine Beschichtungskabine 10 sowie eine insgesamt mit dem Bezugszeichen 12 bezeichnete Oberflächenbehandlungsanlage, in welcher Gegenstände 14 lackiert werden. Als Beispiel für zu lackierende Gegenstände 14 sind Fahrzeugkarosserien 16 gezeigt. Bevor diese zu einer solchen Beschichtungskabine 10 gelangen, werden sie in nicht eigens gezeigten Vorbehandlungsstationen beispielsweise gereinigt und entfettet. Nach dem Beschichtungsvorgang finden verschiedene Nachbehandlungen wie beispielsweise Trocknen statt.

Die Beschichtungskabine 10 umfasst einen oben angeordneten Beschichtungs- oder Lackiertunnel 18, welcher von vertikalen Seitenwänden 20 und einer horizontalen Kabinendecke 22 begrenzt, an den Stirnseiten jedoch offen ist. Darüber hinaus ist der Lackiertunnel 18 in der Weise offen, dass mit Overspray beladene Kabinenluft nach unten strömen kann. Die Kabinendecke 22 bildet üblicherweise eine untere Begrenzung eines Luftzuführraums 24 und ist als Filterdecke 26 ausgebildet. Die Fahrzeugkarosserien 16 werden mit einem im Beschichtungstunnel 18 untergebrachten und an und für sich bekannten Fördersystem 28 von der Eingangsseite des Beschichtungstunnels 18 zu dessen Ausgangsseite transportiert. Im Inneren des Beschichtungstunnels 18 befinden sich Applikationseinrichtungen 30 in Form mehrachsiger Applikationsroboter 32, wie sie ebenfalls an und für sich bekannt sind. Mittels der Applikationsroboter 32 können die Fahrzeugkarosserien 16 mit dem entsprechenden Beschichtungsmaterial beschichtet werden. Bei diesem Beschichtungsvorgang entsteht Overspray, welches, wie bereits erwähnt, nach unten abzuführen ist.

Nach unten hin ist der Beschichtungstunnel 18 über einen begehbaren Gitterrost 34 zu einem darunter angeordneten Anlagenbereich 36 hin offen. In diesem Anlagenbereich 36 werden die von der Kabinenluft mitgeführten Overspray-Partikel von der Kabinenluft getrennt.

Hierzu strömt aus dem Luftzuführraum 24 während eines Beschichtungsvorgangs Luft nach unten durch den Beschichtungstunnel 18 zu dem Anlagenbereich 36. Dabei nimmt die Luft im Beschichtungstunnel 18 vorhandenen Lack-Overspray auf und führt diesen mit sich. Diese mit Overspray beladene Luft wird mittels einer Luftleiteinrichtung 38 zu einer Abscheidevorrichtung in Form eines oder mehrerer Filtermodule 40 geleitet.

Hierfür umfasst die Luftleiteinrichtung 38 bei dem in Figur 1 gezeigten Ausführungsbeispiel einen Leitkanal 42, der durch Leitbleche 44 gebildet ist, die sich von den Seitenwänden 20 nach innen und nach unten geneigt erstrecken. Der Leitkanal 42 mündet unten in mehrere Anschlusskanäle 46, die ihrerseits unten in einen Anschlussstutzen 48 enden.

Während eines Beschichtungsbetriebs ist jedes Filtermodul 40 strömungstechnisch und lösbar mit der Luftleiteinrichtung 38 verbunden. Die Kabinenluft durchströmt in dem Filtermodul 40 ein oder mehrere Filterelemente, an denen sich der Lack-Overspray abscheidet. Hierauf wird nachstehend im Detail eingegangen. Insgesamt ist jedes Filtermodul 40 als austauschbare Baueinheit ausgebildet und kann gegebenenfalls auch als Einweg-Filtermodul ausgelegt sein.

Die nach der Filterung durch das Filtermodul 40 weitgehend von Overspray-Partikeln befreite Kabinenluft strömt aus dem Filtermodul 40 in einen Zwischenkanal 50, über den sie in einen Sammelströmungskanal 52 gelangt. Die Kabinenluft wird über den Sammelströmungskanal 52 einer weiteren Aufbereitung und Konditionierung zugeführt. Im Anschluss daran wird die konditionierte Kabinenluft in einem nicht eigens gezeigten Kreislauf wieder in den Luftzuführungsraum 24 geleitet, aus dem sie wieder von oben in den Beschichtungstunnel 18 einströmt.

Falls die Kabinenluft durch die vorhandenen Filtermodule 40 noch nicht ausreichend von Overspray-Partikeln befreit ist, können den Filtermodulen 40 noch weitere Filterstufen nachgelagert sein. Diesen wird die aus den Filtermodulen 40 abströmende Luft zugeführt. Dort können beispielsweise auch elektrostatisch arbeitende Abscheider eingesetzt werden, wie sie an und für sich bekannt sind.

Wie bereits in Figur 1 angedeutet und später noch genauer erläutert werden wird, weist das Filtermodul 40 mehrere Filterelemente 100-102 auf, die nacheinander von der zu reinigenden Kabinenluft durchströmt werden. Der Verlauf der Strömung in dem Anlagenbereich 36 ist durch die Pfeile 54, 56 symbolhaft dargestellt.

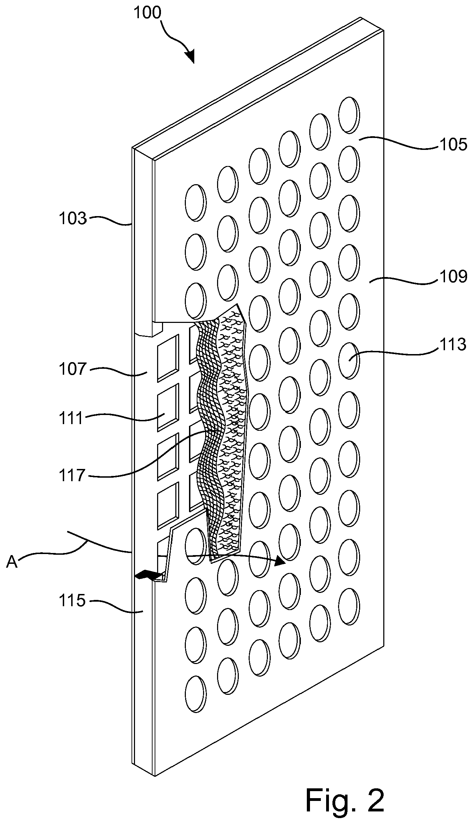

Figur 2 zeigt den Aufbau eines solchen Filterelements 100 anhand einer beispielhaften Ausführungsform. Das Filterelement 100 wird in der in Figur 2 gezeigten Stellung von hinten nach vorne durchströmt, wie durch den Pfeil A dargestellt. Entsprechend ergibt sich eine Anströmseite 103 und eine Abströmseite 105. Das Filterelement 100 weist anströmseitig eine erste Lochplatte 107 sowie abströmseitig eine zweite Lochplatte 109 auf.

Die erste Lochplatte 107 weist im Wesentlichen quadratische Durchgangsöffnungen 111 auf, die zweite Lochplatte 109 weist im Wesentlichen kreisförmige Durchgangsöffnungen 113 auf. Beide Arten von Durchgangsöffnungen 111, 113 sind matrixartig angeordnet. In der vorliegenden Ausführungsform entspricht die Anzahl der anströmseitigen Durchgangsöffnungen 111 der Anzahl der abströmseitigen Durchgangsöffnungen 113 sowohl in der Anzahl als auch im Wesentlichen in der Anordnung. Bei alternativen Ausführungsformen wäre es zur Verstärkung der Trägheitsfilterwirkung alternativ oder zusätzlich möglich, sowohl abströmseitig eine andere Anzahl an Durchgangsöffnungen oder eine andere geometrische Form - bevorzugt eine geringere Anzahl - als auch alternativ oder zusätzlich eine andere Anordnung der Durchgangsöffnungen vorzusehen.

Die anströmseitige erste Lochplatte 107 und die abströmseitige zweite Lochplatte 109 sind über einen Rahmen 115 miteinander verbunden. Der Rahmen 115 ist innerhalb der äußeren Umfangskanten der ersten und der zweiten Lochplatte 107, 109 angeordnet und bildet so einen gleichförmigen Abstand zwischen den Lochplatten 107, 109 aus. Die erste und die zweite Lochplatte 107, 109 liegen somit im Wesentlichen parallel zueinander. Der zwischen den beiden Lochplatten 107, 109 befindliche Zwischenraum ist in der in Figur 2 gezeigten Ausführungsform mit einem Filtermaterial 117 ausgefüllt. Das Filtermaterial 117 kann beispielsweise als Gewebe, Gewirke, Gestricke, Filament, Krallmatte, Vlies etc. ausgebildet sein.

Bei einer Durchströmung der Durchgangsöffnungen 111 der ersten anströmseitigen Lochplatte 107 wird der an der Lochplatte 107 anstehende Luftstrom in die zur Verfügung stehende Anzahl an Durchgangsöffnungen 111 entsprechend der Form und Lage aufgeteilt. Nachdem die abströmseitige Lochplatte 109 anders geformte Durchgangsöffnungen 113 aufweist, ist der sich nach der ersten Lochplatte 107 weiter ausbreitenden Luftstrom gezwungen, Bewegungen parallel zu der Ebene der Lochplatten 107, 109 auszuführen. Bei dieser Bewegung findet eine Trägheitsabscheidung statt. Unterstützt und verstärkt wird die so entstehende Filterwirkung durch die Anwesenheit des Filtermaterials 117, das als Tiefenfilter wirkt. Es werden somit zwei Filtereffekte an einer Stelle kombiniert. Dies führt zu einer besonders effizienten Abscheidung des in dem Luftstrom befindlichen Oversprays.

Bei einer Weiterbildung der in Figur 2 gezeigten Ausführungsform kann vorgesehen sein, dass das Filtergewebe 117 mit einem Additiv wie beispielsweise Industrievaseline versehen ist. Ein solches Additiv kann einerseits die Wirksamkeit der Trägheits-/Tiefenabscheidung an den gerade anfallenden Overspray anpassen und gleichzeitig die Standzeit des Filterelements verbessern. Das Additiv führt zu einer höheren Bindung/Haftung der Partikel am Filtermaterial 117 des Filterelements 100. Besonders bei staubigen Lacken ist häufig ein Mitnahmeeffekt der Lackpartikel durch Abrasion zu beobachten. Dabei werden bereits abgelagerte Partikel durch neu auftreffende Partikel wieder abgespalten und mitgerissen. Dies kann durch die Zugabe eines Additivs verhindert oder verringert werden.

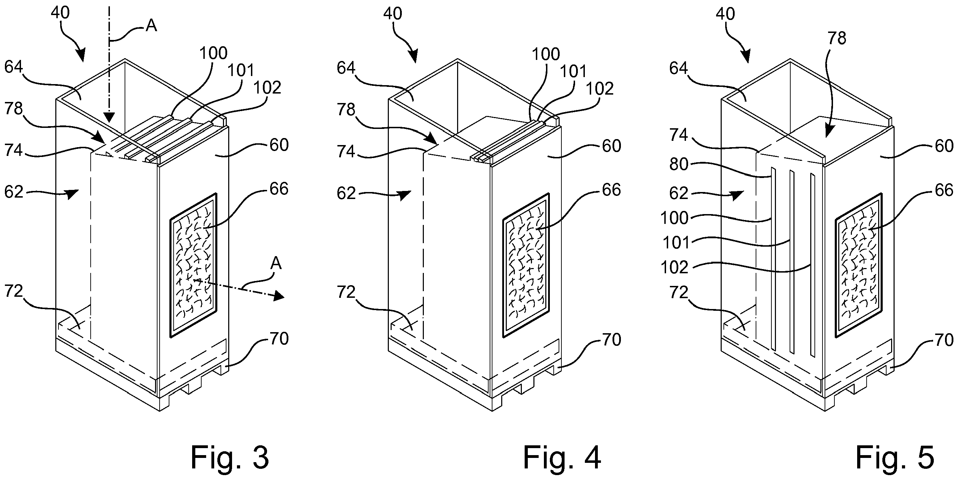

Die Figuren 3-5 zeigen verschiedene Konfigurationen, wie Filterelemente 100-102 in einem Filtermodul 40 anordenbar und/oder entnehmbar sind.

Bei der Figur 3 gezeigten Konfiguration befinden sich die Filtermodule 100-102 in etwa in gleichem Abstand zueinander innerhalb des Filtermoduls 40. Das Filtermodul 40 weist ein Filtermodulgehäuse 60 auf, das einen Filtergehäuseinnenraum 62 begrenzt, der sich zwischen einem Moduleinlass 64 und einem Modulauslass 66 erstreckt und von der Kabinenluft durchströmt wird. Dies ist durch den Pfeil A dargestellt.

Das Modulgehäuse 60 umfasst ein Bodenteil 70, das bei dem vorliegenden Ausführungsbeispiel in seiner Ausgestaltung als standardisierte Tragstruktur beispielsweise nach Vorgabe einer Euro-Palette ausgebildet ist. Die Anordnung mehrerer Filtermodule 40 in dem Anlagenbereich 36 der Beschichtungskabine 10 kann dementsprechend nach einem Raster erfolgen, welches auf dem verwendeten standardisierten Bodenteil 70 beruht.

Ein unterer Sammelbereich des Filtermoduls 40 ist flüssigkeitsdicht und auf diese Weise als Sammelwanne 72 für Beschichtungsmaterial ausgebildet, das sich in dem Filtermodul 40 abscheidet und nach unten abfließt.

In dem Filterraum 62 ist ein Halterahmen 74 angeordnet, der zur Halterung der Filterelemente 100-102 ausgelegt ist. Der Halterahmen 74 umspannt einen Filterraum 78, innerhalb dessen die eigentliche Filterung der einströmenden und mit Overspray beladenen Kabinenluft stattfindet. Während des Filterprozesses strömt die Kabinenluft entlang einer Hauptströmungsrichtung A durch den Filterraum 78 und trifft dabei auf die Filterelemente 100-102. Nach der bereits oben geschilderten Filterung tritt die so gereinigte Luft an dem Modulauslass 66 aus dem Filtermodul 40 aus und verlässt dieses.

Bei der in Figur 3 gezeigten Ausführungsform sind die einzelnen Filterelemente 100-102 von oben in den Filterraum 78 einbringbar und an dem Halterrahmen 74 befestigbar, beispielsweise durch Einschieben. Hierfür können beispielsweise seitliche Führungsnuten, Halteklammern, Verschraubungen, Verklebungen oder Ähnliches vorgesehen sein. Die Filterelemente 100-102 sind äquidistant angeordnet und weisen somit gleich breite Zwischenräume auf, in denen sich die Luftströmung zwischen den einzelnen Filterprozessen wieder vergleichmäßigen kann. Es kann somit nicht nur innerhalb der Filterelemente 100-102 eine Abscheidung stattfinden. Vielmehr kann bei entsprechender Ausgestaltung der Lochplatten der einzelnen Filterelemente 100-102 auch zwischen den einzelnen Filterelementen eine Umlenkung der Luftströmung stattfinden, was wiederum zu einer Trägheitsabscheidung führen kann. Beispielsweise kann die abströmseitige Lochplatte 109 des Filterelements 100 eine höhere Anzahl an Durchgangsöffnungen 113 aufweisen als die anströmseitige Lochplatte des abströmseitig gelegenen Filterelements 101. Alternativ oder zusätzlich kann auch die Form oder/und die Anordnung der Durchgangsöffnungen unterschiedlich sein.

Eine Alternative ist in Figur 4 dargestellt. Dort sind die Filterelemente 100-102 in direktem Kontakt zueinander angeordnet. Der Vorteil dieser Anordnung liegt darin, dass zwar zwischen den einzelnen Filterelementen 100-102 keine gesonderte Trägheitsabscheidung stattfindet und somit der Vorteil einer zusätzlichen Abscheidung wegfällt. Gleichzeitig ist aber so die Filterwirkung weniger abhängig von den Strömungsgeschwindigkeiten zwischen den einzelnen Filterelementen 100-102 und somit berechenbarer.

Figur 5 zeigt eine Ausführungsform, bei der Einschub und Austausch der Filterelemente 100-102 über seitlich angebrachte Schlitze 80 in dem Filtermodul 40 erfolgen kann. Dies erleichtert die Wartung und den Austausch der Filterelemente 100-102.

Bei einer nicht in den Figuren dargestellten Ausführungsform können ein oder mehrere Filterelemente auch unterhalb des Gitterrosts 34, am Beginn des Anlagenbereichs 36 - beispielsweise waagrecht, am Beginn des Leitkanals 42 und/oder am Beginn der Filtervorrichtung 40 positioniert werden.

## Patentansprüche

1. Vorrichtung zum Abscheiden von Overspray aus mit Overspray beladener Kabinenluft von Oberflächenbehandlungsanlagen (12), mit wenigstens einer Abscheideeinheit (40), durch welche mit Overspray beladene Kabinenluft leitbar ist und in welcher Overspray abscheidbar ist, wobei
a) die Abscheideeinheit (49) eine Filtervorrichtung mit mindestens einem Filterelement (100) sowie einem ersten (107) und einem zweiten (109) flächig ausgebildeten Strukturelement aufweist, wobei
b) die Strukturelemente (107, 109) Durchgangsöffnungen (111, 113) aufweisen, welche mit der Kabinenluft durchströmbar sind, und wobei
c) die Durchgangsöffnungen (111, 113) des ersten und des zweiten Strukturelements (107, 109) in Strömungsrichtung (A) so angeordnet sind, dass die Durchgangsöffnungen (107, 109) in Strömungsrichtung (A) nicht vollständig miteinander fluchten.

2. Vorrichtung nach Anspruch 1, wobei die Durchgangsöffnungen (111, 113) des ersten und des zweiten Strukturelements (107, 109) zueinander so angeordnet sind, dass die durchströmende Kabinenluft so geleitet wird, dass eine Trägheitsfilterwirkung entsteht.

3. Vorrichtung nach einem der vorhergehenden Ansprüche, wobei das Filterelement (100) ein erstes Strukturelement (107) und ein zweites Strukturelement (109) aufweist.

4. Vorrichtung nach Anspruch 3, wobei das Filterelement (100) in Strömungsrichtung (A) gesehen zwischen dem ersten Strukturelement (107) und dem zweiten Strukturelement (109) ein Tiefenfilterelement (117) aufweist.

5. Vorrichtung nach Anspruch 4, wobei das Tiefenfilterelement (117) ein eine Partikelagglomeration unterstützendes Additiv aufweist.

6. Vorrichtung nach einem der vorhergehenden Ansprüche, wobei das Filterelement (100) eine Rahmenstruktur (115) aufweist, welche mit dem ersten oder/und zweiten Strukturelement (107, 109) verbunden ist.

7. Vorrichtung nach Anspruch 6, wobei die Rahmenstruktur integral mit dem ersten oder/und dem zweiten Strukturelement ausgebildet ist.

8. Vorrichtung nach einem der vorhergehenden Ansprüche, wobei das Filterelement (100) in Strömungsrichtung (A) gesehen ein erstes Strukturelement (107), ein Tiefenfilterelement (117) und ein zweites Strukturelement (109) aufweist, welche miteinander sandwichartig verbunden sind.

9. Vorrichtung nach einem der vorhergehenden Ansprüche, wobei die Abscheideeinheit (40) eine Aufnahme (74) für ein oder mehrere Filterelemente (100, 101, 102) aufweist.

10. Vorrichtung nach einem der vorhergehenden Ansprüche, wobei ein erstes Filterelement (100) und eine zweites Filterelement (101) vorgesehen sind.

11. Vorrichtung nach Anspruch 10, wobei das erste Filterelement (100) eine andere Filtercharakteristik aufweist als das zweite Filterelement (101).

12. Vorrichtung nach Anspruch11, wobei die Abscheideeinheit zumindest drei Filterelemente (100, 101, 102) mit unterschiedlicher Filtercharakteristik aufweist.

13. Beschichtungsanlage (12) zur Beschichtung von Fahrzeugkarosseriebauteilen mit einer Vorrichtung nach einem der vorhergehenden Ansprüche.

14. Verfahren zur Behandlung von Overspray einer Beschichtungsanlage mit einer Vorrichtung nach einem der Ansprüche 1 bis 12.
